# EUROPÄISCHE PATENTSCHRIFT

(11) **EP 2 794 241 B1**
(45) Veröffentlichungstag und Bekanntmachung des Hinweises auf die Patenterteilung: **07.09.2016**
(21) Anmeldenummer: 12815993.6
(22) Anmeldetag: 19.12.2012
(51) Int. Cl.: B29C 67/00

(54) **VERFAHREN ZUR HERSTELLEN EINES DREIDIMENSIONALEN GEGENSTANDES**
METHOD OF MANUFACTURING A THREE-DIMENSIONAL PRODUCT
PROCÉDÉ DE FABRICATION D'UN OBJET TRIDIMENSIONNEL

(30) Priorität: 23.12.2011 DE 102011121956
(43) Veröffentlichungstag der Anmeldung: 29.10.2014
(73) Patentinhaber: Arburg GmbH + Co KG, 72290 Lossburg (DE)
(72) Erfinder: KRAIBÜHLER, Herbert, 72290 Lossburg (DE); DUFFNER, Eberhardt, 72181 Starzach (DE)
(74) Vertreter: Reinhardt, Harry
(86) Internationale Anmeldenummer: PCT/EP2012/005259
(87) Internationale Veröffentlichungsnummer: WO 2013/091848

(56) Entgegenhaltungen:
- EP-A1- 1 886 793
- EP-A1- 2 266 782

## Beschreibung

Die Erfindung betrifft ein Regelverfahren zur Kennfeldermittlung für die Herstellung eines dreidimensionalen Gegenstandes aus verfestigbarem Material nach dem Oberbegriff des Anspruches 1.

In der Kunststoffteileherstellung ist bekannt, durch Spritzgießen oder Extrudieren in großen Losgrößen und Serien Teile herzustellen. Der Vorteil des Kunststoff-Spritzgießens beruht insbesondere auf der hochgenauen Herstellung von komplexen Teilgeometrien, wobei die Funktionsvielfalt des Spritzgießverfahrens in optimaler Weise die Anforderungen an eine kostengünstige und wirtschaftliche Produktion von Kunststoffteilen abdeckt.

Gleichzeitig wächst mehr und mehr ein Bedarf nach Kunststoffteilen für Stückzahl 1 und kleine Losgrößen, wie z.B. Musterteile mit der Anforderung einer sehr kurzzeitigen Bereitstellung sowie Eigenschaften, die denen von spritzgegossenen Teilen ähnlich sind. Zur Herstellung solcher Teile gibt es Fertigungsverfahren, die weitläufig unter dem Begriff Prototyping bekannt sind. Die Herstellung solcher Teile beruht in den meisten Fällen auf der Erzeugung der Geometrie aus 3D-Daten. Diese Geometrien werden in unterschiedlichster Form durch entsprechende Mittel wie Aufschmelzen von Pulverschichten durch Wärmeeintrag, z.B. mit Laser, generative Systeme wie Druckverfahren in unterschiedlicher verbindender Form der Pulverteile oder auch im sogenannten Schmelzstrangverfahren hergestellt.

Aus der dem Oberbegriff des Anspruches 1 zu Grunde liegenden DE 10 2009 030 099 B4 ist eine Vorrichtung bekannt, bei der eine in der Spritzgießtechnik bekannte Plastifiziereinheit an einen unter Druck setzbaren Materialspeicher für die fluide Phase eines Materials angekoppelt wird. Zur Erzeugung eines Gegenstandes auf einem Objektträger in einem Bauraum wird dieses Material über eine Austrittsöffnung in Form von Tropfen ausgetragen, wobei aufgrund der Adhäsionskräfte des Materials ein hoher Druck im Bereich bis zu 200 MPa und meist auch hohe Temperaturen aufgebracht werden müssen. Die Tropfen sollen dabei eine Größe von 0,01 bis 1 mm³ aufweisen. Die Öffnungszeit des taktbaren Verschlussmittels an der Austrittsöffnung der Austragseinheit soll vorzugsweise im Bereich weniger Millisekunden liegen und der Durchmesser der Austrittsöffnung im Bereich weniger Zehntelmillimeter. Für diesen Zweck wird dort ein Festkörpergelenk vorgeschlagen, das mittels eines Aktuators in Form eines Piezoelements betätigt wird. Dabei wird dort in Absatz (0031) und (0032) bereits vorgeschlagen, den Aktuator als Kraftmesselement auszubilden, um die Vorspannung des Festkörpergelenks am Betriebspunkt zu messen und nachzuregeln. Dafür ist allerdings eine gesonderte Sensorik vorgesehen. Ziel ist es, damit gezielt und bewusst die Form des auszutragenden Materials wie zum Beispiel die Tropfenform zu beeinflussen. Der Aufbau der jener Vorrichtung zu Grunde liegenden Vorrichtung ist aus der EP 2 266 782 A1 (s.a. EP 1 886 793 A1) bekannt.

Ein unter hohem Druck stehendes zähflüssiges Fluid kann mit jener Einrichtung durch eine Düse in kleinsten Tröpfchen ausgetragen werden, wobei der Düsendurchmesser etwa 0,1 mm und die Arbeitstemperaturen des Fluids bis zu 450°C erreichen können. Da bei diesen Arbeitsbedingungen eine dynamische Dichtung von aufeinander gleitenden Bauteilen schwer beherrschbar ist, wurde dort das Festkörpergelenk eingesetzt, das die elastischen Werkstoffeigenschaften zum Öffnen und Schließen der Düse nutzt. Der Austrag an Tropfen zum Aufbau des dreidimensionalen Gegenstandes erfolgt mit sehr hoher Frequenz von etwa 1 bis 5 KHz. Deshalb muss die gesamte Austragseinheit eine relativ hohe Eigensteifigkeit aufweisen. Andererseits sind die gewünschte Amplitude und Kraft des Aktuators in Form des Piezoelements technisch nicht beliebig einstellbar und bestimmen auch die Kosten dieser Komponente. Typischerweise kann ein solches Element Kräfte um die 100 N und Hübe von etwa 0,1 mm erzeugen. Damit das Verschlussmittel in Form des Festkörpergelenks betätigt werden kann und gleichzeitig dem großen Fluiddruck von bis zu 200 MPa Stand halten kann, ist eine mikromechanische Abstimmung am gewünschten Betriebspunkt der Austragseinheit ebenso erforderlich wie eine Erfassung der jeweiligen fertigungstechnisch bedingten Eigenschaften der verwendeten Komponenten wie zum Beispiel die Elastizitätskonstante des Festkörpergelenks und deren maximaler elastischer Arbeitsbereich.

Dies ist umso mehr erforderlich, wenn es darum geht eine gute Oberfläche des herzustellenden Gegenstands zu erreichen, da dann die Tropfengröße üblicherweise im Bereich von 0,001 mm³ liegt. Um größere Gegenstände im cm³-Bereich zu bauen, sind dann je Gegenstand schnell 10⁶ und mehr Hübe notwendig. Bei einer derartigen Anzahl von Wechselbelastungen ist es notwendig, dass Verschlussmittel in einem eingeschränkten elastischen Bereich zu betreiben, um eine akzeptable Lebensdauer zu erreichen.

Der Hub des Aktuators beträgt unter den vorliegenden Einbaubedingungen etwa 0,03 bis 0,05 mm. Damit ist der Stellweg kleiner als die Summe aller auftretenden Fehler durch Fertigungstoleranzen bzw. unterschiedliche Wärmedehnung der einzelnen Bauteile, der Mikroumformung an Düsennadel und Düse, usw. Die Anpresskraft muss jedoch im laufenden Austragsprozess stets konstant gehalten werden, damit kein unerwünschter Materialaustritt erfolgt und die Tropfengröße konstant gehalten werden kann. Aufgrund des hohen Drucks im Material besteht ein sehr empfindliches Kräftegleichgewicht. Weicht die Anpresskraft nach unten ab, kommt es statt Tröpfchen zu einem kontinuierlichen Fadenaustrag. Bei zu hoher Anpresskraft lässt sich die Düse nicht mehr öffnen.

Ausgehend von diesem Stand der Technik liegt der vorliegenden Erfindung die Aufgabe zugrunde, ein Verfahren zu schaffen, mit dem ein Verschlussmittel an einer derartigen Vorrichtung so schonend und damit so lange wie möglich betrieben werden kann.

Diese Aufgabe wird durch ein Verfahren mit den Merkmalen des Anspruches 1 gelöst.

Erfindungsgemäß wurde eine Stelleinheit und eine Regelung für deren Betrieb entwickelt, bei der ausgehend von den aktuellen Betriebsbedingungen ein Kennfeld erstellt wird, innerhalb dessen die Vorrichtung sinnvollerweise zu betreiben ist. Dazu wird die Anpresskraft des Aktuators erfasst, Abweichungen werden erkannt und selbstständig nachkorrigiert. Grundlage ist die Erfassung eines Kennfelds für eine elastische Verformung des Verschlussmittels mittels des von einer Stelleinheit betätigten Aktuators, wobei das Verschlussmittel anschließend innerhalb dieses Kennfelds durch Einstellen eines elastischen Arbeitsbereichs des Verschlussmittels mittels der Stelleinheit betrieben wird. Der Messverstärker zum Erfassen des Kennfelds ist also beim Betrieb des Verschlussmittels der Aktuator für das Verschlussmittel.

Ausgehend von einem mechanischen Freistellungspunkt, der dadurch definiert ist, dass der Aktuator, der vorzugweise als Piezoelement ausgebildet ist, gerade noch das Verschlussmittel berührt, werden vorzugsweise zunächst ohne Druck bei Betriebstemperatur die elastischen Eigenschaften des Verschlussmittels im Zusammenwirken mit dem Aktuator bestimmt. Im Anschluss daran wird ein Kennfeld unter Betriebsdruck und bei Betriebstemperatur erarbeitet, sodass je nach konkreter individueller Anordnung der Komponenten der Vorrichtung ein Betriebszustand im elastischen Bereich zuverlässig gewährleistet werden kann. Dadurch erfolgt ein Betriebspunkt-abgleich unter Berücksichtigung der Eigenschaften der individuellen Komponenten jeder Austragseinheit inline mittels vorzugsweise servomotorisch angetriebener Vorspanneinrichtung und Messung der Vorspannkraft mittels des Aktuators.

Wird dabei ein Piezoelement als Aktuator verwendet, kann dieses zwischen der aktiven Betätigung und dem Messen umgeschaltet werden, sodass sich eine einfache und zuverlässige Bestimmung und Regelung ergibt. Zunächst wird der Nullpunkt bei Betriebstemperatur ohne Massedruck gemessen und justiert. Ausgehend hiervon wird die elastische Verformbarkeit des Verschlussmittels bei Betriebstemperatur gemessen. Damit einher geht das Messen und Justieren der zur Abdichtung notwendigen Vorspannkraft ausgehend vom justierten Freistellpunkt bei Betriebstemperatur unter Druck. Unter diesen Bedingungen wird die maximale elastische Verformbarkeit unter Betriebstemperatur und Druck ermittelt, um dadurch möglichst geringe Wege an der Grenze zwischen geöffnetem und geschlossenem Verschlussmittel zu erhalten. Die Steuereinheit regelt dann den Betrieb der Stelleinheit des Aktuators im Bereich der zulässigen Betriebsdaten für einen möglichst verschleißfreien Dauerbetrieb der Austragseinheit, wobei das vermessene elastische Betriebskennfeld nicht verlassen wird. Vorzugsweise wird dieses Betriebskennfeld zyklisch nachvermessen, um zu überprüfen, ob die Austrittseinheit und insbesondere das als Verschlussmittel verwendet Festkörpergelenk noch in Ordnung ist.

Weitere Vorteile ergeben sich aus den Unteransprüchen und der nachfolgenden Beschreibung eines bevorzugten Ausführungsbeispiels.

### Kurzbeschreibung der Figuren

Im Folgenden wird die Erfindung anhand eines in den Figuren dargestellten Ausführungsbeispiels näher erläutert. Es zeigen:
Fig. 1 eine teilweise geschnittene Seitenansicht einer Vorrichtung zur Herstellung eines dreidimensionalen Gegenstandes,
Fig. 2 einen vergrößerten Ausschnitt aus Fig. 1 im Bereich der Austragseinheit,
Fig. 3 die Austragseinheit gemäß Fig. 2 in Verbindung mit der zugehörigen Steuerung,
Fig. 4 bis 6 Ablaufdiagramme der verfahrensgemäßen Vorgehensweise.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

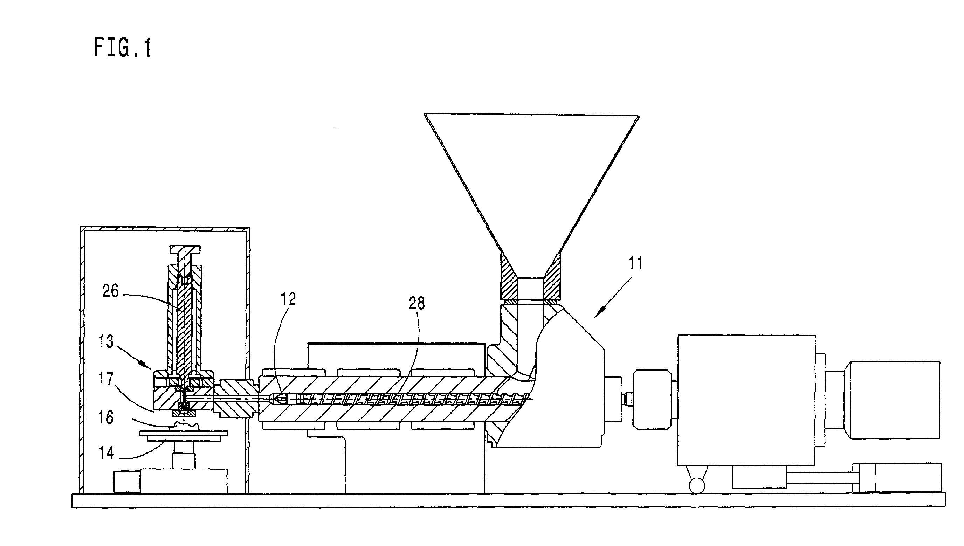

Bevor auf das Verfahren näher eingegangen wird, wird hiermit zunächst die in den Figuren 1 bis 3 dargestellte Vorrichtung erläutert. Die Figuren 1 bis 3 zeigen eine Vorrichtung zur Herstellung eines dreidimensionalen Gegenstandes 16 aus verfestigbarem Material, das entweder im Ausgangszustand in einer fluiden Phase vorliegt, oder verflüssigt werden kann. Das Material wird sequentiell in Form von Tropfen 15 ausgetragen, die vorzugsweise diskontinuierliche Tropfen sind. Der Austrag erfolgt aus der Austragseinheit 13, bis sich Schicht für Schicht das Objekt 16 auf einem Objektträger 14 im Bauraum 17 ergibt. Das verfestigbare Material ist ein plastifiziertes Material wie zum Beispiel Silikon oder ein plastifizierbares Material wie Kunststoff oder auch pulverförmige Materialien, wobei es im Wesentlichen darauf ankommt, dass das verfestigbare Material entweder im Ausgangszustand in einer fluiden Phase vorliegt oder verflüssigt werden kann. Das Material kann auch ein unter Wärme reversibel aufschmelzbares und damit recyclebares Material sein. Beliebige andere Materialien können verwendet werden, sofern diese Materialien durch die Vorrichtung plastifizierbar und vor allem durch die wenigstens eine Austragseinheit austragbar sind. Von Vorteil ist dabei, dass in der Spritzgießtechnik übliche Materialien verwendet werden können, da das Material, worauf noch eingegangen wird, in einer an sich bekannten, aus der Spritzgießtechnik bekannten Plastifiziereinheit aufbereitet wird. Aufwändige Spezialmaterialien sind nicht erforderlich.

Das verfestigbare Material weist in der fluiden Phase einen sogenannten laminaren Quellfluss auf. In den Quellfluss geht u.a. die Anlagerung der Schmelze an der Wandung ein. Dies wird am deutlichsten bei einem Blick in die Erkenntnisse der Spritzgießtechnik. Bei der Formfüllung eines einfachen, rechteckigen Kanals wird die Schmelze über einen sogenannten Angusspunkt eingespritzt und beginnt sich von diesem Punkt mit geschlossenen Fließfronten kreisförmig auszubreiten, bis sie die gesamte Breite der Kavität ausfüllt. Einige Zeit danach kann der Bereich zwischen dem Einlauf und der Fließfront als nahezu ausgebildet betrachtet werden. An der Fließfront selbst herrscht eine besondere Strömungssituation, der "Quellfluss", da die Stromlinien in diesem Bereich wie eine Quelle erscheinen, wenn man sie in Bezug auf ein mitbewegtes Koordinatensystem betrachtet. Zwischen zwei den Kavitätsoberflächen nahe liegenden, rasch erstarrten Masseschichten fließt die Schmelze, wobei sie in der Mitte der Kavität mit größeren Geschwindigkeiten zur Fließfront hin schreitet. Kurz bevor die Schmelze die Fließfront erreicht, reduziert sich ihre Geschwindigkeitskomponente in Fließrichtung, sie fließt schräg zur Wand, bis sie sich an die Wand anlegt.

Der laminare Quellfluss ist für die Erzeugung von auf den Bauraum 17 ,ausgerichteten' Tropfen 15 auf Grund seiner laminaren Ausbildung einerseits von Vorteil, andererseits bestehen vor allem bei der Ausbildung kleiner Tropfen genau hier auch die Probleme, die eine Umsetzung mit aus der Spritzgießtechnik bekannten Einrichtungen und Materialien erschweren. Die Wandhaftung führt dazu, dass sich die Massen nur schwer zu Tropfen mit gewünschten kleinen Volumen, vorzugsweise im Bereich kleiner gleich 1 mm³ und gewünschter Fluggeschwindigkeit ausbilden lassen, andererseits ist eine entsprechend hohe Viskosität des Materials gerade für die Ausbildung einer geeigneten Tropfenform eines diskontinuierlichen Tropfens von Bedeutung.

Dies unterscheidet die verwendeten Materialien auch von den vorbekannten Wachsen. Aufgrund ihrer Viskosität lassen sich Wachse im normalen Thermodruck- oder Inkjetverfahren ausbringen, also durch reines kinematisches, druckloses Beschleunigen ohne Druckdifferenz des aufgeschmolzenen Tropfens. Die hier verwendeten Materialien unterscheiden sich hiervon bereits dadurch, dass ihre Viskositätszahl um eine bis mehrere Zehnerpotenzen höher ist. So liegt die dynamische Viskositätszahl des verfestigbaren Materials zwischen 100 und 10000 Pa.s, wobei vorzugsweise das verfestigbare Material ein in der Spritzgießtechnik üblicher Kunststoff oder ein Harz ist. Dies macht die Verarbeitung aus einem unter Druck setzbaren Materialspeicher erforderlich, da Drücke von mehr als 10 bis 100 MPa (100 bis 1000 bar) ohne weiteres erforderlich sind, insbesondere wenn zur Erzielung kleiner Tropfenvolumen kleine Austragsöffnungen eingesetzt werden.

Vorzugsweise liegt das gewünschte Volumen des Tropfens 15 insbesondere im Bereich von 0,01 bis 0,5 mm³, vorzugsweise im Bereich von 0,05 bis 0,3 mm³ und besonders vorzugsweise im Bereich von etwa 0,1 mm³. Der Durchmesser der Austrittsöffnung 20 ist insbesondere kleiner gleich 1mm, vorzugsweise etwa 0,1 mm. Bei einer durchaus üblichen Einspritzgeschwindigkeit von 100 cm³/s, die durch einen sogenannten Punktanguss mit 0,1 mm Durchmesser die Masse fördert, ergibt sich mit Volumenstrom durch Fläche ein Wert von 10.000 m/s. Dies führt für die fluide Phase zu einem laminaren Quellfluss mit Fließgeschwindigkeiten bis zu 10.000 m/s.

Die Vorrichtung hat mit ihrer Austragseinheit 13 die Aufgabe, hochviskose fluide Materialien wie aufgeschmolzene Kunststoffe in kleinsten Mengen bis hinunter zu wenigen Mikrogramm aus einem Materialspeicher 12 auszutragen, der unter großem Druck und eventuell hoher Temperatur steht. Die kleinsten Mengen/Tropfen 15 des Materials werden in diskreten einzelnen Portionen ausgebracht, wobei deren Größe von der Vorrichtung beeinflussbar ist. Die ausgetragenen Portionen besitzen eine so hohe kinetische Energie, dass sie die Adhäsionskräfte überwinden können und von der Vorrichtung abheben und als Tropfen 15 im Bauraum 17 auf dem Objektträger 14 den Gegenstand 16 aufbauen.

Da es sich um flüssige, aber hochviskose Materialien handelt, mit hoher Adhäsionskraft und kleinem Gewicht, wird die kinetische Energie mittels einer Druckdifferenz zwischen Materialspeicher 12 und dem im Bauraum 17 gebildeten Flugraum für die Tropfen 15 übertragen. Die Portionierung erfolgt mittels einer getakteten Blende, die mit einer Düsennadel 21 als Verschlussmittel versehen ist. Bedingt durch die geforderten Dimensionen der Portionen als auch die Viskositätseigenschaften sind üblicherweise Drücke im Bereich von 100 MPa (1000 bar) und mehr, Verschlussblenden kleiner 0,1 mm und weiterhin Verschlusszeiten kleiner 0,001 s erforderlich. Da die Materialien meist Kunststoffe sind, herrschen im Materialspeicher Temperaturen bis zu 450° C.

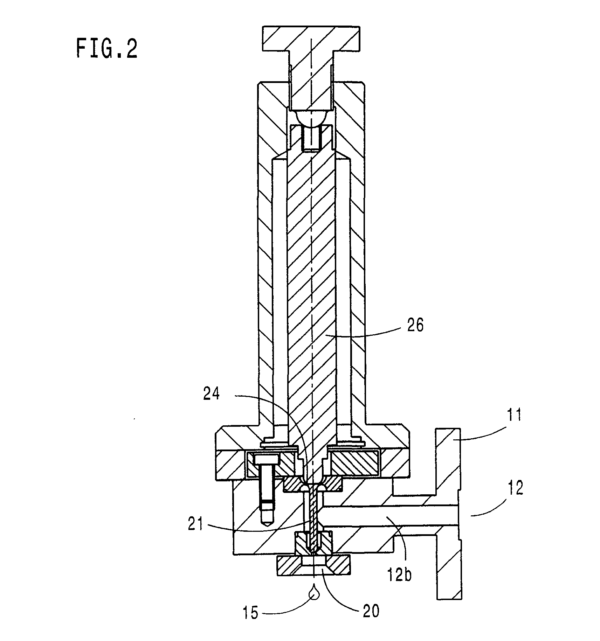

Unter diesen Bedingungen wird die Vorrichtung als Dosiereinheit mit möglichst wenigen Abdichtungen/Kontakten zur Außenwelt realisiert. Gemäß Fig. 2 ist dazu das Verschlussmittel 24 als elastisch verformbares Festkörpergelenk ausgebildet, wie es aus der DE 10 2009 030 099 B4 bekannt ist. Als Verschlussmittel 24 wird in Verbindung mit dem Festkörpergelenk eine Düsennadel 21 verwendet. Rückseitig greift an der Düsennadel 21 bzw. dem Festkörpergelenk ein Aktuator 26 vorzugsweise unmittelbar an. Über eine Aufbereitungseinheit 11 wird das verfestigbare Material in die fluide Phase überführt und gelangt von dort in wenigstens einen Materialspeicher 12 und zur wenigstens einen Austragseinheit 13. Von dort wird das Material durch eine mit einem taktbaren Verschlussmittel 24 versehene Austrittsöffnung 20 in Richtung auf den Bauraum 17 ausgetragen. Um den für das tropfenweise Austragen erforderlichen Druck zu erzeugen, ist eine Druckerzeugungseinheit vorgesehen, die durch eine aus der Spritzgießtechnik bekannte Plastifiziereinheit gebildet wird. Die Druckerzeugungseinheit ist dann zum Beispiel die in Fig. 1 dargestellte Förderschnecke oder ein ähnliches Fördermittel 28.

Die Düsennadel 21 ist direkt an das federnde Verschlussmittel 24 angehängt, welches den Materialspeicher 12 für die fluide Phase des Materials nach außen zum Aktuator 26 hin verschließt. Somit sind außer der Befüllöffnung des Materialspeichers 12 und dem Verschlussmittel keine weiteren Abdichtungen notwendig. Durch die Rückstellkräfte des im Ausführungsbeispiel verwendeten Festkörpergelenks genügt eine einseitige Betätigung des Verschlussmittels für die Düsennadel 21 mittels des Aktuators 26.

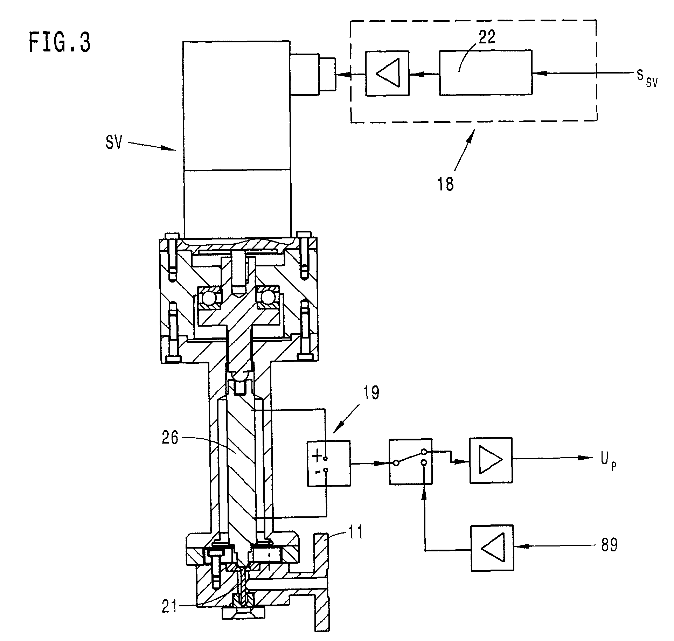

Der Aktuator 26 ist vorzugweise als Piezoelement ausgebildet und kann in der Vorspannung geregelt werden. Über eine Sensorik 19, deren Signale die Stellung des Aktuators 26 den Betriebsbedingungen im Materialspeicher anpasst und damit den Betriebspunkt nachregelt, lässt sich die Austrittsöffnung so ansteuern, dass die hohen Drücke als auch hohen Temperaturausdehnungen kompensiert werden können. Gemäß Fig. 3 werden zum Beispiel die Kräfte im Aktuator 26 erfasst und über die Steuerung 18 und den Regler 22 auf Kraftsollwerte nachgeregelt. Der Aktuator 26 ist vor allem bei Ausgestaltung als Piezoelement ohne weiteres auch als Kraftmesselement zu verwenden, um die Vorspannung des Verschlussmittels 24 am Betriebspunkt zu messen und mittels einer Stelleinheit SV, vorzugsweise einer Servoverstelleinheit nachzuregeln.

Ein Betrieb und eine Betätigung des Aktuators 26 sind grundsätzlich auch mit einem zusätzlich eingebauten statischen Dehnmessstreifen-Sensor möglich, der jedoch Temperatur kompensiert werden muss. Dies kann gegebenenfalls inline bei Betriebstemperatur einmalig mit dem Aktuator 26 geschehen unter Temperaturkennlinienermittlung für den eingebauten Dehnungsmessstreifen.

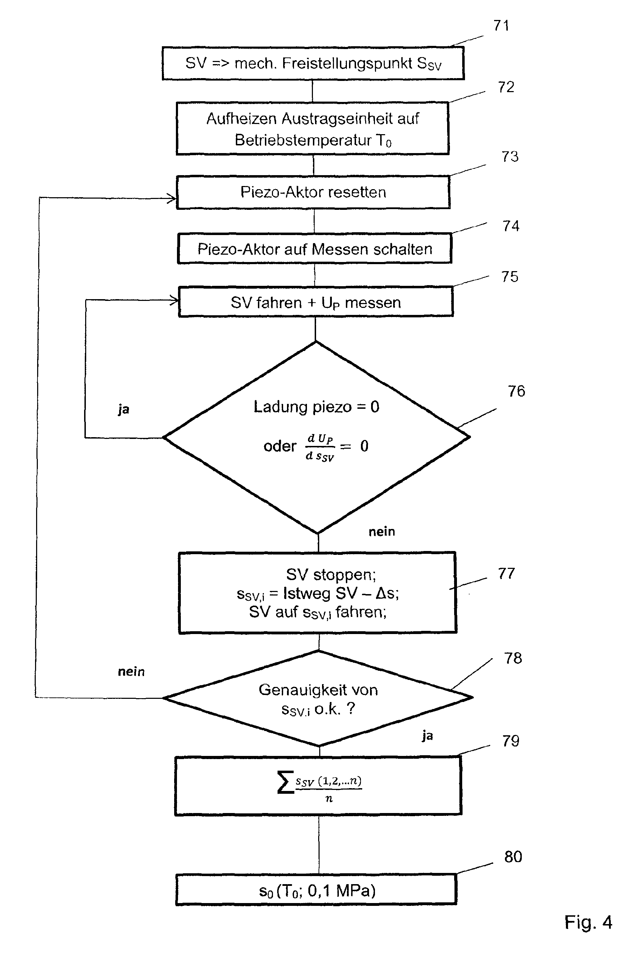

Mit einer derartigen Vorrichtung lassen sich ein Verfahren und eine Vorrichtung zur Herstellung eines dreidimensionalen Gegenstandes 16 wie folgt betreiben, wozu auf die Ablaufdiagramme der Figuren 4 bis 6 verwiesen wird.

Grundsätzlich wird das taktbare Verschlussmittel 24 mittels des Aktuators 26 betätigt, wobei die Vorspannung des Verschlussmittels 24 am Betriebspunkt mittels des Aktuators 26 gemessen werden kann und die Vorspannung mittels der Stelleinheit SV nachgeregelt werden kann. Mit anderen Worten kann der Aktuator zwischen dem aktiven Betätigen und dem Messvorgang hin- und herschalten. Durch den Messvorgang wird ein Kennfeld 89 für die elastische Verformung des Verschlussmittels 24 mittels des von der Stelleinheit SV betätigten Aktuators 26 erfasst. Im Anschluss an die Ermittlung des Kennfelds wird das Verschlussmittel 24 mittels der Stelleinheit SV innerhalb des Kennfelds 89 bei einer elastischen Verformung in einem elastischen Arbeitsbereich betrieben, der dem Verschlussmittel eine möglichst lange Lebensdauer garantiert.

In einem ersten Schritt 71 wird dazu ein Freistellungspunkt bestimmt. Unter dem Freistellungspunkt wird der Punkt verstanden, an dem der Aktuator 26 gerade noch am Verschlussmittel 24 anliegt. Dieser Freistellungspunkt wird zunächst ohne Druck und bei Umgebungstemperatur bestimmt. Anschließend wird die Austragseinheit 13 in Schritt 72 auf Betriebstemperatur T₀ aufgeheizt. Bei dieser Betriebstemperatur, jedoch immer noch ohne Druck wird der Freistellungspunkt mittels des Aktuators 26 erneut gemessen und justiert. Ausgehend von dem so ermittelten Freistellungspunkt bei Betriebstemperatur wird - immer noch ohne Druck - nun die elastische Verformbarkeit des Verschlussmittels 24 bestimmt. Die Bestimmung kann nach dem Hook'schen Gesetz dadurch erfolgen, dass die Federkonstante beobachtet wird, das heißt, sobald die Federkonstante des Verschlussmittels 24 vom Weg s der Stelleinheit abhängig wird, liegt keine rein elastische Verformung mehr vor. Im nächsten Schritt wird jetzt Druck auf die fluide Phase aufgebracht. Unter diesen Bedingungen wird die zur Abdichtung erforderliche Vorspannkraft ausgehend vom Freistellungspunkt bei Betriebstemperatur T₀ nun unter Druck und unter Berücksichtigung der zuvor ermittelten Verformbarkeit des Verschlussmittels 24 gemessen. Damit wird eine maximale elastische Verformbarkeit mittels eines Aktuators bei Betriebstemperatur T₀ und unter Druck bestimmt. Dies führt zur Ermittlung eines Kennfeldes, insbesondere wenn dieser Vorgang bei verschiedenen Betriebstemperaturen im üblichen Betriebstemperaturbereich der Austragseinheit 13 bestimmt wird, sodass ein Bereich eingehalten werden kann, in dem das vermessene elastische Betriebskennfeld nicht verlassen wird. Dieses Betriebskennfeld wird vorzugsweise auch zyklisch nachvermessen, um zu überprüfen, ob die gesamte Austragseinheit 13, speziell das als Verschlussmittel 24 verwendete Festkörpergelenk noch in Ordnung ist. Vermessen wird also sozusagen die Hook'sche Gerade bei verschiedene Betriebsbedingungen. Damit ist der Messverstärker zum Erfassen des Kennfelds für einen elastischen Arbeitsbereich des Verschlussmittels 24 unter verschiedenen Betriebsbedingungen dann auch der Aktuator 26 für das Verschlussmittel 24 bei Betrieb des Verschlussmittels und damit bei Betrieb der Vorrichtung zur Herstellung des Gegenstands 16.

Im Detail wird gemäß Fig. 4 zunächst der Temperaturnullpunkt bei Betriebstemperatur T₀ ermittelt. Dazu erfolgt in Schritt 71 eine Rückstellung der Stelleinheit SV des Aktuators 26 auf den mechanischen Freistellungspunkt, das heißt auf den Punkt, bei dem der Aktuator 26 gerade am Verschlussmittel 24 anliegt. In Schritt 72 wird die Austragseinheit 13 auf Betriebstemperatur T₀ aufgeheizt. Jetzt wird der Aktuator 26 gemäß Schritt 73 resettet und gemäß Schritt 74 auf Messen umgeschaltet.

Als nächstes wird die Stelleinheit SV des Aktuators 26 betätigt und dabei die Spannung U_{P} des Aktuators 26 gemäß Schritt 75 gemessen. In Schritt 76 wird überprüft, ob die Ladung am Piezoelement gleich Null ist und/oder das Verhältnis von Spannung zu Verschiebeweg der Stelleinheit gleich Null wird (d.h. d U_{P}/ d s_{SV} = 0). Sobald dies der Fall ist, wird die Stelleinheit SV gestoppt und dieser Wert, das heißt der Weg s_{SV} der Stelleinheit SV des Aktuators 26 in Schritt 77 gespeichert. Dann wird in Schritt 77 der Wert um ein kleines Δs verringert, um sicherzustellen, dass die Spannung wieder sicher Null ist, das Piezoelement resettet und der Vorgang wiederholt. Dies geschieht so lange, bis in Schritt 78 eine ausreichende Genauigkeit für den Weg s_{SV} festgestellt wird. Damit ergeben sich verschiedene Werte von s_{SV}, die in Schritt 79 rechnerisch gemittelt werden. Der gemittelte Wert wird als Freistellungspunkt der Austragseinheit 13 bei Betriebstemperatur T abgespeichert als s₀(T; 0,1 1 MPa).

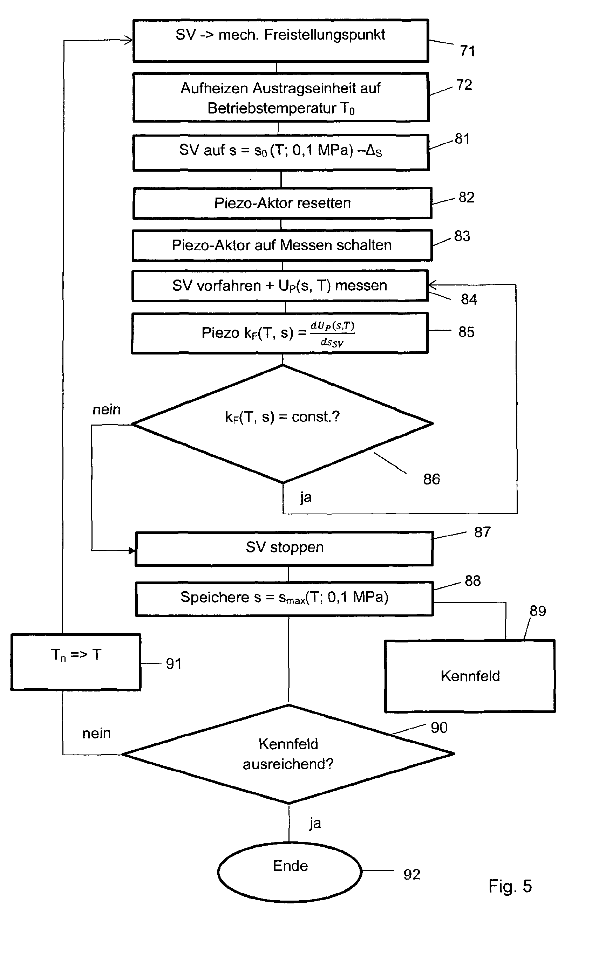

Als nächstes wird gemäß Fig. 5 die elastische Dehnungskonstante bei Betriebstemperatur T₀ bestimmt. Hierzu wird zunächst in Schritt 71 die Stelleinheit SV des Aktuators 26 auf den mechanischen Freistellungspunkt zurückgestellt, wie er in Fig. 4 Schritt 71 bereits ermittelt wurde. Dann wird die Austragseinheit 13 auf Betriebstemperatur T₀ aufgeheizt. Im Schritt 81 kommt jetzt der ermittelte Wert s₀(T; 0,1 MPa) zum Tragen. Die Stelleinheit wird jetzt nämlich auf einen Verstellweg eingestellt, der diesem ermittelten Weg abzüglich eines kleinen Maßes Δs von zum Beispiel 0,001 mm entspricht. In Schritt 82 wird der Aktuator 26 resettet und in Schritt 83 auf Messen umgeschaltet. Jetzt wird die Stelleinheit des Aktuators wieder betätigt und dabei die Spannung U_{P}(s, T) des Aktuators 26 unter Temperatur in Schritt 84 gemessen. Bei dieser Messung erfolgt gemäß Schritt 85 eine Echtzeitauswertung der Federkonstante k_{F} des Festkörpergelenks, das heißt, es wird gemessen, ob sich über den Verfahrweg der Stelleinheit die Spannung U_{P} des Aktuators 26 in Abhängigkeit des Weges s ändert (Schritt 86). So lange nämlich die Dehnkonstante k_{F} (T, s) = d U_{P}(s, T) / d s_{SV} konstant ist, das heißt, konstant über den Weg s_{SV} der Stelleinheit SV ist, befindet sich das Verschlussmittel 24 im elastischen Bereich. Ist dies nicht mehr der Fall, befindet sich das Verschlussmittel im unelastischen Bereich, d.h., es wird verformt. Daher wird die Stelleinheit SV in Schritt 87 gestoppt, da dann die maximale elastische Arbeitsauslenkung des Festkörpergelenks erreicht ist, das heißt der maximale elastische Wert des Verschlussmittels 24 als sₘₐₓ(T, 01 MPa). Dieser Wert wird im Kennfeld 89 gespeichert, gleichzeitig wird allerdings auch überprüft, ob eine Wiederholung der für die Bestimmung von sₘₐₓ erforderlichen Schritte für andere Temperaturen erforderlich ist. Ist dies nach Schritt 90 der Fall, d.h., ist das Kennfeld noch nicht ausreichend, wird die Temperatur in Schritt 91 entsprechend geändert und es werden die Schritte nochmals wiederholt. Dazu werden die Abläufe gemäß Fig. 4 und 5 nochmals für die geänderte Temperatur ermittelt.

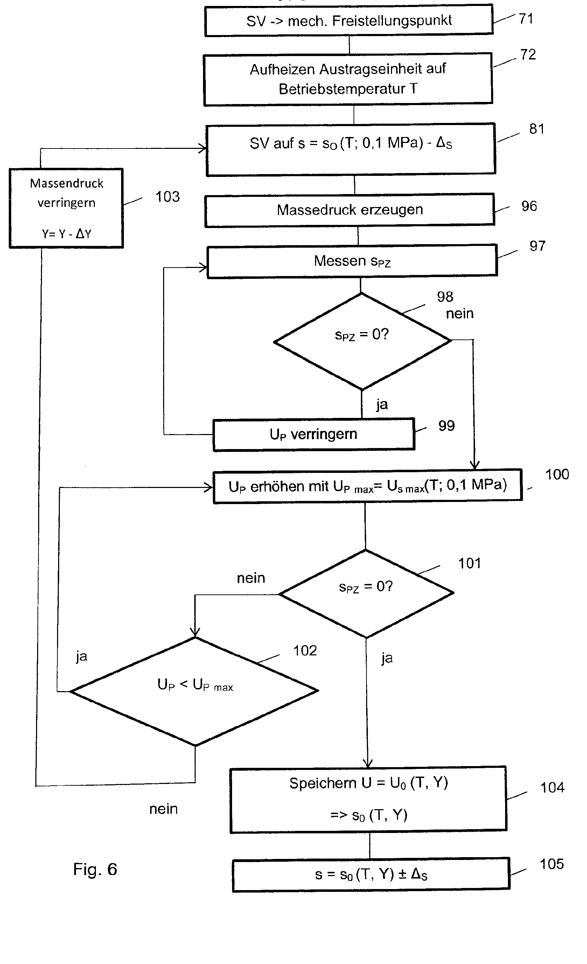

Gemäß Fig. 6 wird dann die für die Abdichtung erforderliche Vorspannkraft unter Betriebsdruck ermittelt. Gemäß den Schritten 71 und 72 wird dabei zunächst wieder die Stelleinheit SV auf den mechanischen Freistellungspunkt eingestellt und die Austragseinheit 13 auf Betriebstemperatur aufgeheizt. Wie im Schritt 81 wird auch jetzt in Fig. 6 wieder die Stelleinheit auf den Stellweg von s₀(T; 0,1 MPa) abzüglich eines kleinen Maßes Δs eingestellt. Dann wird Druck erzeugt und es wird gemäß Fig. 6 gemessen, ob das Fördermittel 28 wie z.B. die Förderschnecke im Plastifizierzylinder noch einen Weg s_{PZ} zurücklegt, das heißt, ob noch Material gefördert wird. Es handelt sich dabei um das Messen der Vorlaufgeschwindigkeit des Fördermittels 28. Alternativ könnte auch gemessen werden, ob noch Material an der Austrittsöffnung 20 der Austragseinheit 13 austritt, was zum Beispiel über eine Kamera überwacht werden kann.

Wenn also noch eine Vorlaufgeschwindigkeit des Fördermittels vorliegt bzw. noch Material austritt, wird die Spannung U_{P} am Aktuator 26 in Schritt 99 so lange erhöht, bis die Vorlaufgeschwindigkeit des Fördermittels 28 Null wird oder alternativ die optische Überwachung kein aus der Austrittsöffnung 20 austretendes Material detektiert. Die Obergrenze ist dabei die Spannung U_{P max} beim Maximalwert sₘₐₓ (T; 0,1 MPa) gemäß Schritt 100. Wird so eine Fördergeschwindigkeit von Null erreicht, wird nach der Abfrage 101 im Schritt 104 die so ermittelte Spannung als minimale Betriebsspannung des Aktuators U₀(T₀, Y) bei Betriebstemperatur T₀ und Druck Y für die Bedingung geschlossenes Verschlussmittel 24 an der Austragseinheit 13 gespeichert. Von dem so bestimmtem Stellweg s₀(T, Y) der Stelleinheit plus/minus einem geringen Maß Δs aus wird dann der Betrieb der Vorrichtung gestartet.

Ist in Schritt 98 bereits keine Vorlaufgeschwindigkeit des Fördermittels 28 oder kein austretendes Material mehr erkennbar, so wird die Spannung U_{P} verringert, bis ein derartiger Austritt in Schritt 98 festgestellt werden kann. Ist es allerdings durch diese Vorgehensweise nicht möglich, entweder den Austrag von Material durch Verringerung der Spannung U_{P} zu erreichen oder den Austrag von Material durch Erhöhung der Spannung zu unterbinden, was unter Berücksichtigung des Maximalspannungswert U_{P max} bei bekannter Federkonstante in Schritt 102 abgefragt wird, wird im Schritt 103 der Massedruck abgebaut und das Verfahren erneut gestartet. Dabei wird der Aktuator 26 in Plus- und Minus-Richtung verfahren bis zum für die elastischen Einstellungen maximalen Weg von sₘₐₓ(T; 0,1 MPa) und zwar so lange bis entweder die Vorlaufgeschwindigkeit des Fördermittels 28 Null wird oder kein Material mehr austritt. Sofern die Vorrichtung betriebsbereit ist, kann auf diesem Weg der entsprechende optimale Betriebspunkt ermittelt werden.

### Bezugszeichenliste

- 11: Aufbereitungseinheit
- 12: Materialspeicher
- 13: Austragseinheit
- 14: Objektträger
- 15: Tropfen
- 16: Gegenstand
- 17: Bauraum
- 18: Steuerung
- 19: Sensorik
- 20: Austrittsöffnung
- 21: Düsennadel
- 22: Regler
- 24: Verschlussmittel
- 26: Aktuator
- 28: Fördermittel
- 89: Kennfeld
- SV: Stelleinheit

## Patentansprüche

1. Verfahren zur Herstellung eines dreidimensionalen Gegenstandes (16) aus verfestigbarem Material, das entweder im Ausgangszustand in einer fluiden Phase vorliegt oder verflüssigt werden kann, durch sequenzielles Austragen von Tropfen (15) aus wenigstens einem unter Druck setzbaren Materialspeicher (12) für die fluide Phase mittels mindestens einer Austragseinheit (13) durch eine mit einem taktbaren Verschlussmittel (24) versehene Austrittsöffnung (20), mit den Schritten:
- Betätigen des taktbaren Verschlussmittels (24) mittels eines Aktuators (26),
- Messen einer Vorspannung des Verschlussmittels (24) am Betriebspunkt mittels des Aktuators (26),
- Regeln der Vorspannung des Verschlussmittels (24) mittels einer Stelleinheit (SV),
**gekennzeichnet durch** die Schritte
- Erfassen eines Kennfelds (89) für die elastische Verformung des Verschlussmittels (24) mittels des von der Stelleinheit (SV) betätigten Aktuators (26),
- Einstellen eines elastischen Arbeitsbereichs des Verschlussmittels (24) mittels der Stelleinheit (SV) innerhalb des Kennfelds (89).

2. Verfahren nach Anspruch 1, **dadurch gekennzeichnet, dass** zur Ermittlung des Kennfelds (89) folgende Schritte durchgeführt werden:
a) Bestimmen des durch die Anlage des Aktuators (26) am Verschlussmittel (24) definierten Freistellungspunkts ohne Druck und bei Umgebungstemperatur,
b) Aufheizen der Austragseinheit (13) auf Betriebstemperatur (T₀),
c) Bestimmen des Freistellungspunkts bei Betriebstemperatur (T₀) ohne Druck,
d) Messen der elastischen Verformbarkeit des Verschlussmittels (24) mittels des Aktuators (26) ausgehend vom Freistellungspunkt bei Betriebstemperatur (T₀) ohne Druck gemäß Schritt c) durch Verfahren der Stelleinheit (SV),
e) Aufbringen des Drucks auf die fluide Phase im Materialspeicher (12),
f) Messen der zur Abdichtung erforderlichen Vorspannkraft mittels des Aktuators (26) ausgehend vom Freistellungspunkt bei Betriebstemperatur (T₀) unter Druck nach Schritt e) unter Berücksichtigung der Verformbarkeit nach Schritt d) und Justieren der Vorspannkraft mittels der Stelleinheit (SV),
g) Messen der maximalen elastischen Verformbarkeit mittels des Aktuators (26) bei Betriebstemperatur (T₀) und unter Druck,
h) Betreiben des Herstellungsverfahren mittels des Aktuators (26) innerhalb des in Schritt f) und g) bestimmten Kennfelds (89).

3. Verfahren nach Anspruch 1 oder 2, **dadurch gekennzeichnet, dass** als Aktuator (26) ein einseitig betätigtes Piezoelement verwendet wird.

4. Verfahren nach einem der vorhergehenden Ansprüche, **dadurch gekennzeichnet, dass** als Verschlussmittel (24) ein Festkörpergelenk verwendet wird.

5. Verfahren nach einem der vorhergehenden Ansprüche, **dadurch gekennzeichnet, dass** im Betriebszustand das in Anspruch 1 bestimmte Kennfeld (89) zyklisch vermessen wird.

6. Verfahren nach einem der vorhergehenden Ansprüche 2 bis 5, **dadurch gekennzeichnet, dass** zur Bestimmung des Freistellungspunkts bei Betriebstemperatur (T₀) bei den Schritten b) bis c) folgende Schritte durchgeführt werden.
- Rückstellen der Stelleinheit (SV) des Aktuators (26) auf den in Schritt a) definierten Freistellungspunkt,
- Aufheizen der Austragseinheit (13) auf Betriebstemperatur (T₀),
- Resetten des Aktuators (26),
- Umschalten des Aktuators (26) auf Messen,
- Verfahren der Stelleinheit (SV) des Aktuators (26) unter Messung der Spannung (U_{P})des Aktuators, bis die Ladung am Piezoelement größer Null ist und/oder bis die Steigung der Spannung über dem Stellweg (s_{SV}) der Stelleinheit (SV) ungleich Null ist (d U_{P}/d s_{SV} ≠ 0) ist,
- Verringern des Stellwegs (s_{SV}) um ein kleines Maß (Δs) und Speichern des so ermittelten Stellwegs,
- Abspeichern des ermittelten Freistellungspunkts (s₀(T₀; 0,1 MPa)) der Stelleinheit (SV) des Aktuators (26) der Austragseinheit (13) bei Betriebstemperatur (T₀).

7. Verfahren nach Anspruch 6, **dadurch gekennzeichnet, dass** zur Bestimmung einer elastischen Dehnungskonstante des Verschlussmittels (24) bei Betriebstemperatur (T₀) gemäß Schritt d) des Anspruches 2 folgende Schritte durchgeführt werden:
- Rückfahren der Stelleinheit (SV) des Aktuators (26) auf den in Schritt a) ermittelten Freistellungspunkt,
- Aufheizen der Austragseinheit (13) auf Betriebstemperatur (T₀),
- Verfahren der Stelleinheit (SV) des Aktuators (26) auf den in Anspruch 6 ermittelten Freistellungspunkt (s₀(T₀; 0,1 MPa)) abzüglich eines geringen Maß (Δs),
- Resetten des Aktuators (26),
- Umschalten des Aktuators (26) auf Messen,
- Verfahren der Stelleinheit (SV) des Aktuators (26) unter Messen der Spannung (U_{P}(s, T)) des Aktuators (26),
- Auswerten in Echtzeit der Dehnkonstante k_{F}(T, s) als Differential der Spannung des Aktuators über dem Weg (s) der Stelleinheit (d U_{P}(s, T) / ds),
- Stoppen der Stelleinheit (SV) des Aktuators (26), wenn k_{F}(T, s) nicht konstant ist und abhängig vom Weg (s_{SV}) der Stelleinheit (SV) wird,
- Speichern der maximalen elastischen Auslenkung (sₘₐₓ(T; 0,1 MPa)) des Verschlussmittels (24),
- Rückfahren der Stelleinheit auf den in Anspruch 6 ermittelten Freistellungspunkt s₀(T; 0,1 MPa) und Umschalten des Aktuators (26) auf Betätigen.

8. Verfahren nach einem der Ansprüche 6 oder 7, **dadurch gekennzeichnet, dass** das Verfahren nach den Ansprüchen 6 oder 7 für verschiedene Betriebstemperaturen des Verschlussmittels (24) wiederholt wird und ein Kennlinienfeld (89) für die bestehende Anordnung aus Stelleinheit (SV), Verschlussmittel (24) und Aktuator (26) gespeichert wird, das beim Verfahren zur Herstellung des Gegenstands (16) verwendet wird.

9. Verfahren nach einem der Ansprüche 6 bis 8, **dadurch gekennzeichnet, dass** zur Justage der zur Abdichtung erforderlichen Vorspannkraft nach den Schritten f) und g) des Anspruches 2 folgende Schritte erfolgen:
1. Rückfahren der Stelleinheit SV des Aktuators (26) auf einen Punkt, der kleiner als der in Anspruch 6 ermittelte Freistellungspunkt (s₀(T; 0,1 MPa)) ist.
2. Aufheizen der Austragseinheit (13) auf Betriebstemperatur (T₀),
3. Verfahren der Stelleinheit (SV) des Aktuators (26) auf den in Anspruch 6 ermittelte Freistellungspunkt (s₀(T; 0,1 MPa)).
4. Aufbringen des gewünschten Drucks auf den Materialspeicher (12),
5. Messen der Vorlaufgeschwindigkeit eines Fördermittels der Aufbereitungseinheit (11) und/oder Erfassen des an der Austrittsöffnung (20) austretenden Materials,
6. Betreiben der Stelleinheit des Aktuators (26), bis die Vorlaufgeschwindigkeit des Fördermittels (28) der Aufbereitungseinheit (11) gleich Null ist oder bis an der Austragseinheit (20) kein Material mehr austritt,
7. Erfassen und Speichern der diesem Zustand entsprechenden Betriebsspannung (U₀ (T, Y)) des Aktuators (26) bei Betriebstemperatur (T₀) und Druck (Y) im Materialspeicher (12) für geschlossene Austrittsöffnung (20).

10. Verfahren nach Anspruch 9, **dadurch gekennzeichnet, dass** für den Fall, dass bereits beim ersten Messen der Vorlaufgeschwindigkeit des Fördermittels (28) der Aufbereitungseinheit (11) die Vorlaufgeschwindigkeit bereits Null ist oder beim Messen des an der Austragseinheit (13) austretenden Materials bereits kein Material mehr austritt, die Spannung der Stelleinheit (SV) des Aktuators (26) verringert wird, bis eine Vorlaufgeschwindigkeit des Fördermittels (28) vorhanden ist oder bis Material austritt.

11. Verfahren nach Anspruch 9, **dadurch gekennzeichnet, dass**, falls der Punkt für die gerade noch geschlossene Austrittsöffnung (20) nicht ermittelt werden kann, der Druck im Materialspeicher abgebaut wird und die Schritte 3 bis 5 des Anspruches 9 wiederholt werden, wobei dann der Aktuator (26) in beide Richtungen maximal bis zur maximalen elastischen Auslenkung (+/- sₘₐₓ(T; 0,1 MPA)) des Verschlussmittels (24) verfahren wird, bis die Vorlaufgeschwindigkeit des Fördermittels (28) der Aufbereitungseinheit (11) Null wird oder austretendes Material an der Austrittsöffnung (20) gerade nicht detektiert wird.

## Claims

1. Method for producing a three-dimensional object (16) from solidifiable material, which is either present in the starting state in a fluid phase or can be liquefied, by the sequential discharge of drops (15) from at least one pressurisable material storage device (12) for the fluid phase by means of at least one discharge unit (13) through an outlet (20) provided with a pulsable closure element (24), with the steps:
- actuating the pulsable closure element (24) by means of an actuator (26),
- measuring an prestressing of the closure element (24) at the operating point by means of the actuator (26),
- controlling the prestressing of the closure element (24) by means of an adjusting element (SV),
**characterised by** the steps
- determining a mapping (89) for the elastic deformation of the closure element (24) by means of the actuator (26) actuated by the adjusting element (SV),
- adjusting an elastic working range of the closure element (24) by means of the adjusting element (SV) within the mapping (89).

2. Method according to claim 1, **characterised in that** the following steps are performed to determine the mapping (89):
a) determining the release point defined by the disposition of the actuator (26) on the closure element (24) without pressure and at ambient temperature,
b) heating the discharge unit (13) to operating temperature (T₀),
c) determining the release point at operating temperature (T₀) without pressure,
d) measuring the elastic deformability of the closure element (24) by means of the actuator (26) working from the release point at operating temperature (T₀) without pressure in accordance with step c) by operating the adjusting element (SV),
e) applying the pressure to the fluid phase in the material storage device (12),
f) measuring the prestressing force required for sealing by means of the actuator (26) working from the release point at operating temperature (T₀) under pressure in accordance with step e) taking into consideration the deformability in accordance with step d) and adjusting the prestressing force by means of the adjusting element (SV),
g) measuring the maximum elastic deformability by means of the actuator (26) at operating temperature (T₀) and under pressure,
h) operating the production process by means of the actuator (26) within the mapping (89) determined in steps f) and g).

3. Method according to claim 1 or 2, **characterised in that** a piezoelectric element operated on one side is used as actuator (26).

4. Method according to one of the preceding claims, **characterised in that** a flexure hinge is used as closure element (24).

5. Method according to one of the preceding claims, **characterised in that** in the operating state the mapping (89) determined in claim 1 is measured cyclically.

6. Method according to one of the preceding claims 2 to 5, **characterised in that** the following steps are performed to determine the release point at operating temperature (T₀) in steps b) to c):
- returning the adjusting element (SV) of the actuator (26) to the release point defined in step (a),
- heating the discharge unit (13) to operating temperature (T₀),
- resetting the actuator (26),
- switching the actuator (26) over to measurement,
- operating the adjusting element (SV) of the actuator (26) with measurement of the voltage (U_{P}) of the actuator until the charge of the piezoelectric element is greater than zero and/or until the increase of the voltage over the adjustment path (s_{SV}) of the adjusting element (SV) is other than zero (d U_{P}/d s_{SV} ≠ 0),
- reducing the adjustment path (s_{SV}) by a small amount (Δs) and storing the adjustment path thus determined,
- storing the determined release point (so(To; 0.1 MPa)) of the adjusting element (SV) of the actuator (26) of the discharge unit (13) at operating temperature (T₀).

7. Method according to claim 6, **characterised in that** the following steps are performed to determine an elastic expansion constant of the closure element (24) at operating temperature (T₀) in accordance with step d) of claim 2:
- returning the adjusting element (SV) of the actuator (26) to the release point determined in step a),
- heating the discharge unit (13) to operating temperature (T₀),
- operating the adjusting element (SV) of the actuator (26) to the release point (so(To; 0.1 MPa)) determined in claim 6 minus a small amount (Δs),
- resetting the actuator (26),
- switching the actuator (26) over to measurement,
- operating the adjusting element (SV) of the actuator (26) with measurement of the voltage (U_{P}(s, T)) of the actuator (26),
- evaluating in real time the expansion constant (k_{F}(T, s) as the differential of the voltage of the actuator over the path (s) of the adjusting element (d U_{P}(s, T) / ds),
- stopping the adjusting element (SV) of the actuator (26) if k_{F}(T, s) is not constant and becomes dependent on the path (s_{SV}) of the adjusting element (SV),
- storing the maximum elastic deflection (sₘₐₓ(T; 0.1 MPa)) of the closure element (24),
- returning the adjusting element to the release point (s₀(T; 0.1 MPa)) determined in claim 6 and switching the actuator (26) over to actuation.

8. Method according to one of claims 6 or 7, **characterised in that** the method in accordance with claims 6 or 7 is repeated for different operating temperatures of the closure element (24) and a mapping (89) for the existing arrangement comprising adjusting element (SV), closure element (24) and actuator (26) is stored, which is used in the method for producing the object (16).

9. Method according to one of claims 6 to 8, **characterised in that** the following steps are performed for adjusting the prestressing force required for sealing in accordance with steps f) and g) of claim 2:
1. returning the adjusting element SV of the actuator (26) to a point that is smaller than the release point (s₀(T; 0.1 MPa)) determined in claim 6,
2. heating the discharge unit (13) to operating temperature (T₀),
3. operating the adjusting element (SV) of the actuator (26) to the release point (s₀(T; 0.1 MPa)) determined in claim 6,
4. applying the desired pressure to the material storage device (12),
5. measuring the advancing speed of a feeding means of the processing unit (11) and/or detecting the material discharging from the outlet (20),
6. operating the adjusting element of the actuator (26) until the advancing speed of the feeding means (28) of the processing unit (11) is equal to zero or until no further material discharges at the discharge unit (20),
7. detecting and storing the operating voltage (U₀(T, Y) of the actuator (26) corresponding to this state at operating temperature (T₀) and pressure (Y) in the material storage device (12) for a closed outlet (20).

10. Method according to claim 9, **characterised in that** for the case that already during the first measurement of the advancing speed of the feeding means (28) of the processing unit (11) the advancing speed is already zero or during measurement of the material discharging at the discharge unit (13) no further material is discharging, the voltage of the adjusting element (SV) of the actuator (26) is reduced until an advancing speed of the feeding means (28) is present or until material discharges.

11. Method according to claim 9, **characterised in that** if the point for the currently still closed outlet (20) cannot be determined, the pressure is reduced in the material storage device and steps 3 to 5 of claim 9 are repeated, wherein the actuator (26) is then operated in both directions at maximum up to maximum elastic deflection (+/-sₘₐₓ(T; 0.1 MPa)) of the closure element (24) until the advancing speed of the feeding means (28) of the processing unit (11) becomes zero or no discharging material at the outlet (20) is currently detected.

## Revendications

1. Procédé de fabrication d'un objet tridimensionnel (16) à partir d'un matériau durcissable, qui se présente au départ sous la forme d'une phase fluide ou qui peut être fluidifié, par distribution séquentielle de gouttes (15) provenant d'au moins un réservoir de matériau (12) pour la phase fluide pouvant être mis sous pression, au moyen d'au moins une unité de distribution (13) à travers un orifice de sortie (20) pourvu d'un moyen de verrouillage cadençable (24), comportant les étapes suivantes :
- l'actionnement du moyen de verrouillage cadençable (24) au moyen d'un organe d'actionnement (26),
- la mesure d'une précontrainte du moyen de verrouillage (24) au point de fonctionnement au moyen de l'organe d'actionnement (26) ;
- le réglage de la précontrainte du moyen de verrouillage (24) au moyen d'une unité de réglage (SV),
**caractérisé par** les étapes suivantes :
- mesure d'un diagramme caractéristique (89) pour la déformation élastique du moyen de verrouillage (24) au moins de l'organe d'actionnement (26) actionné par l'unité de réglage (SV),
- réglage d'un domaine de travail élastique du moyen de verrouillage (24) au moyen de l'unité de réglage (SV) au sein du diagramme caractéristique (89).

2. Procédé selon la revendication 1, **caractérisé en ce que** pour la mesure du diagramme caractéristique (89), les étapes suivantes sont mises en oeuvre :
a) détermination du point de libération défini par la disposition de l'organe d'actionnement (26) au niveau du moyen de verrouillage (24), sans pression et à température ambiante,
b) chauffage de l'unité de distribution (13) jusqu'à la température de fonctionnement (T₀),
c) détermination du point de libération à la température de fonctionnement (T₀) sans pression,
d) mesure de la déformabilité élastique du moyen de verrouillage (24) au moyen de l'organe d'actionnement (26) en partant du point de libération à la température de fonctionnement (T₀), sans pression suivant le point c) par mise en oeuvre de l'unité de réglage (SV),
e) application de pression sur la phase fluide dans le réservoir de matériau (12),
f) mesure de la force de précontrainte nécessaire à l'étanchéisation, au moyen de l'organe d'actionnent (26) en partant du point de libération à la température de fonctionnement (T₀) sous pression suivant l'étape e) en prenant en considération la déformabilité suivant l'étape d) et l'ajustement de la force de précontrainte au moyen de l'unité de réglage (SV),
g) mesure de la déformabilité élastique maximale au moyen de l'organe d'actionnement (26) à la température de fonctionnement (T₀) et sous pression,
h) mise en oeuvre du procédé de fabrication au moyen de l'organe d'actionnement (26) à l'intérieur du diagramme caractéristique (89) déterminé aux étapes f) et g).

3. Procédé selon la revendication 1 ou 2, **caractérisé en ce qu'**on utilise comme organe d'actionnement (26) un élément piézoélectrique actionné d'un seul côté.

4. Procédé selon l'une des revendications précédentes, **caractérisé en ce qu'**on utilise comme moyen de verrouillage (24) une articulation de corps solide.

5. Procédé selon l'une des revendications précédentes, **caractérisé en ce qu'**à l'état de fonctionnement, le diagramme caractéristique (89) déterminé à la revendication 1 est mesuré de manière cyclique.

6. Procédé selon l'une des revendications précédentes 2 à 5, **caractérisé en ce que** pour la détermination du point de libération à la température de fonctionnement (T₀) aux étapes b) à c), les étapes suivantes sont effectuées :
- retour de l'unité de réglage (SV) de l'organe d'actionnement (26) au point de libération défini à l'étape a),
- chauffage de l'unité de distribution (13) à la température de fonctionnement (T₀),
- réinitialisation de l'organe d'actionnement (26),
- commutation de l'organe d'actionnement (26) sur la position de mesure,
- mise en oeuvre de l'unité de réglage (SV) de l'organe d'actionnement (26) en mesurant la tension (U_{P}) de l'organe d'actionnement, jusqu'à ce que la charge au niveau de l'élément piézoélectrique soit supérieure à zéro et/ou que l'augmentation de la tension sur le chemin de réglage (s_{SV}) de l'unité de réglage (SV) soit différente de zéro (d U_{P}/d s_{SV} ≠ 0),
- réduction du chemin de réglage (s_{SV}) d'une petite quantité (Δs) et stockage du chemin de réglage ainsi obtenu,
- enregistrement du point de libération obtenu (so(To; 0,1 MPa)) de l'unité de réglage (SV) de l'organe d'actionnement (26) de l'unité de distribution (13) à la température de fonctionnement (T₀).

7. Procédé selon la revendication 6, **caractérisé en ce que** pour la détermination d'une constante d'allongement élastique du moyen de verrouillage (24) à la température de fonctionnement (T₀) suivant l'étape d) de la revendication 2, les étapes suivantes sont effectuées :
- retour de l'unité de réglage (SV) de l'organe d'actionnement (26) au point de libération obtenu à l'étape a),
- chauffage de l'unité de distribution (13) à la température de fonctionnement (T₀),
- mise en oeuvre de l'unité de réglage (SV) de l'organe d'actionnement (26) au point de libération (so(To ; 0,1 MPa)) après déduction d'une petite quantité (Δs),
- réinitialisation de l'organe d'actionnement (26),
- commutation de l'organe d'actionnement (26) sur la position de mesure,
- mise en oeuvre de l'unité de réglage (SV) de l'organe d'actionnement (26) en mesurant la tension (U_{P}(s, T)) de l'organe d'actionnement (26),
- exploitation en temps réel de la constante d'allongement k_{F}(T, s) comme différentiel de la tension de l'organe d'actionnement sur le chemin (s) de l'unité de réglage (d U_{P}(s, T) / ds),
- arrêt de l'unité de réglage (SV) de l'organe d'actionnement (26), lorsque k_{F}(T, s) n'est pas constant et devient dépendant du chemin (s_{SV}) de l'unité de réglage (SV),
- enregistrement de la déviation maximale élastique (sₘₐₓ(T; 0,1 MPa)) du moyen de verrouillage (24),
- retour de l'unité de réglage au point de libération so(T ; 0,1 MPa) obtenu à la revendication 6 et commutation de l'organe d'actionnement (26) sur la position d'actionnement.

8. Procédé selon l'une des revendications 6 ou 7, **caractérisé en ce que** le procédé selon les revendications 6 ou 7 est répété pour plusieurs températures de fonctionnement du moyen de verrouillage (24) et un diagramme de lignes caractéristiques (89) pour le dispositif constitué de l'unité de réglage (SV), du moyen de verrouillage (24) et de l'organe d'actionnement (26) est enregistré et est utilisé lors du procédé de fabrication de l'objet (16).

9. Procédé selon l'une des revendications 6 à 8, **caractérisé en ce que** pour l'ajustement de la force de précontrainte nécessaire à l'étanchéisation, après les étapes f) et g) de la revendication 2, les étapes suivantes ont lieu :
1. retour de l'unité de réglage SV de l'organe d'actionnement (26) à un point qui est inférieur au point de libération (so(T ; 0,1 MPa)) obtenu à la revendication 6 ;
2. chauffage de l'unité de distribution (13) à la température de fonctionnement (T₀) ;
3. mise en oeuvre de l'unité de réglage (SV) de l'organe d'actionnement (26) au point de libération (s₀(T ; 0,1 MPa)) obtenu à la revendication 6 ;
4. application de la pression souhaitée sur le réservoir de matériau (12),
5. mesure de la vitesse d'avancement d'un moyen d'alimentation de l'unité de préparation (11) et/ou mesure du matériau sortant par l'orifice de sortie (20) ;
6. actionnement de l'unité de réglage de l'organe d'actionnement (26), jusqu'à ce que la vitesse d'avancement du moyen d'alimentation (28) de l'unité de préparation (11) soit égale à zéro ou jusqu'à ce qu'il n'y ait plus de matériau sortant par l'unité de distribution (20) ;
7. mesure et enregistrement de la tension de fonctionnement (Uo (T, Y)) de l'organe d'actionnement (26) correspondant à cet état, à la température de fonctionnement (T₀) et à la pression (Y) dans le réservoir de matériau (12) pour l'orifce de sortie fermé (20).

10. Procédé selon la revendication 9, **caractérisé en ce que**, dans le cas où déjà lors de la première mesure de la vitesse d'avancement du moyen d'alimentation (28) de l'unité de préparation (11), la vitesse d'avancement est déjà nulle ou lors de la mesure du matériau sortant de l'unité de distribution (13) il ne sort déjà plus de matériau, la tension de l'unité de réglage (SV) de l'organe d'actionnement (26) est diminuée, jusqu'à ce qu'une vitesse d'avancement du moyen d'alimentation (28) existe ou jusqu'à ce que du matériau sorte.

11. Procédé selon la revendication 9, **caractérisé en ce que**, dans le cas où le point pour l'orifice de sortie (20) fermé de justesse ne peut pas être déterminé, la pression dans le réservoir de matériau est abaissée et les étapes 3 à 5 de la revendication 9 sont répétées, l'organe d'actionnement (26) étant alors entraîné dans les deux directions au maximum jusqu'à l'allongement élastique maximal (± sₘₐₓ(T ; 0,1 MPa)) du moyen de verrouillage (24), jusqu'à ce que la vitesse d'avancement du moyen d'alimentation (28) de l'unité de préparation (11) soit nulle ou que du matériau sortant par l'orifice de sortie (20) ne soit plus détecté de peu.
